# FASCICULE DE BREVET EUROPEEN

(11) **EP 2 901 853 B1**
(45) Date de publication et mention de la délivrance du brevet: **09.11.2016**
(21) Numéro de dépôt: 15152961.7
(22) Date de dépôt: 29.01.2015
(51) Int. Cl.: A01K 5/00

(54) **Machine de distribution avec une ouverture perfectionnée**
Verteilmaschine mit einer verbesserten Öffnung
Distributing machine with an improved opening

(30) Priorité: 31.01.2014 FR 1450765
(43) Date de publication de la demande: 05.08.2015
(73) Titulaire: Kuhn-Audureau S.A., 85260 La Copechagnière (FR)
(72) Inventeur: Uguen, Yann, 85260 La Copechagniere (FR); Pele, Nicolas, 85170 Le Poire Sur Vie (FR)
(74) Mandataire: Esch, Esther Evelyne

(56) Documents cités:
- WO-A1-2014/009650
- DE-C- 930 920
- FR-A1- 2 748 630
- US-A- 3 101 759

## Description

La présente invention se rapporte à une machine de distribution de produits pour l'alimentation ou la formation de litière pour les animaux, comportant :
- une cuve pour transporter les produits,
- un ventilateur d'éjection présentant un rayon de ventilateur et pouvant être entraîné en rotation durant le travail dans un sens de rotation autour d'un axe géométrique de rotation sensiblement horizontal ou légèrement incliné par rapport à l'horizontale,
- un carter situé à une extrémité de la cuve et dans lequel le ventilateur d'éjection est logé, ce carter comportant une première ouverture pour le passage des produits de la cuve vers le ventilateur d'éjection et une deuxième ouverture pour la sortie des produits du carter, la première ouverture comportant un côté supérieur, un côté inférieur, un premier côté latéral et un deuxième côté latéral, les produits venant de la cuve et passés à travers la première ouverture étant ensuite repris et déplacés par le ventilateur d'éjection suivant une direction orientée du premier côté latéral vers le deuxième côté latéral compte-tenu du sens de rotation du ventilateur d'éjection, un premier plan étant horizontal et passant par une extrémité supérieure du côté supérieur, un deuxième plan étant vertical, sensiblement parallèle à l'axe géométrique de rotation et passant par une deuxième extrémité du deuxième côté latéral la plus éloignée horizontalement de l'axe géométrique de rotation,
- au moins un organe de déchiquetage et de mixage des produits contenus dans la cuve pouvant être animé durant le travail et déplaçant les produits contenus dans la cuve vers la première ouverture.

Des machines de ce type sont largement connues. Elles sont utilisées pour mélanger et distribuer différentes sortes de produits qui sont destinés à l'alimentation ou à la formation de litière pour les animaux. Ces machines comportent une cuve pouvant recevoir du fourrage ou de la paille en vrac ou sous forme de balles. Durant le travail, ces produits sont déchiquetés et mélangés par au moins un organe de déchiquetage et de mixage, par exemple une vis dotée de couteaux et pouvant tourner autour d'un axe par exemple sensiblement vertical. Un carter situé à une extrémité de la cuve comporte une première ouverture pour le passage des produits de la cuve vers l'intérieur du carter. Une porte mobile est située au niveau de la première ouverture ou à proximité de celle-ci. Cette porte est maintenue dans une position fermée pour empêcher l'introduction des produits à l'intérieur du carter tant que le travail de déchiquetage et de mixage des produits dans la cuve n'est pas terminé. Lorsque les produits sont suffisamment déchiquetés et mélangés, la porte est ouverte et l'organe de déchiquetage et de mixage en rotation pousse les produits de la cuve en direction de la première ouverture. En franchissant celle-ci, les produits parviennent à un ventilateur d'éjection situé dans le carter et pouvant tourner autour d'un axe géométrique de rotation sensiblement horizontal ou légèrement incliné par rapport à l'horizontale. Ce ventilateur d'éjection comporte des pales qui déplacent les produits contenus à l'intérieur du carter en direction d'une deuxième ouverture du carter disposée dans une partie supérieure de celui-ci. Cette deuxième ouverture est raccordée à une goulotte d'éjection permettant d'orienter le flux des produits à distribuer aux animaux. La première ouverture comporte un côté supérieur, un côté inférieur, un premier côté latéral et un deuxième côté latéral. Sur les machines connues, la première ouverture est généralement sensiblement rectangulaire, les côtés supérieur et inférieur étant sensiblement horizontaux, les premier et deuxième côtés latéraux étant sensiblement verticaux. Les produits franchissant la première ouverture et déplacés par le ventilateur d'éjection le sont suivant une direction orientée du premier côté latéral vers le deuxième côté latéral compte-tenu du sens de rotation du ventilateur d'éjection. Le ventilateur d'éjection tournant à grande vitesse comprime l'air dans une zone située à l'intérieur du carter et s'étendant, vu dans le sens de rotation, du deuxième côté latéral et du côté supérieur vers la deuxième ouverture. A l'inverse, une partie de la première ouverture comprise entre le côté supérieur, le côté inférieur, le premier côté latéral et l'axe géométrique de rotation est une zone en dépression où l'air et les produits venant de la cuve sont aspirés par le ventilateur d'éjection en rotation. Entre ces deux zones, à savoir entre l'axe géométrique de rotation et l'endroit où le côté supérieur et le deuxième côté latéral se raccordent l'un à l'autre, une fraction des produits déplacés par le ventilateur d'éjection a fréquemment tendance à être refoulée vers la cuve au lieu d'être dirigée vers la deuxième ouverture. Ceci est dû à la forme sensiblement parallélépipédique de la première ouverture. Cet inconvénient réduit le débit de chantier des machines connues et rend plus difficile le vidage complet de la cuve pendant le travail.

US-A-3101759 décrit une machine conforme au préambule de la revendication 1.

La présente invention a pour but une machine de distribution de produits pour l'alimentation ou la formation de litière pour les animaux ne présentant pas les défauts des machines connues.

A cet effet, une importante caractéristique de l'invention consiste en ce qu'une paroi du carter s'étend verticalement depuis le premier plan vers le côté inférieur et horizontalement depuis le deuxième plan vers le premier côté latéral, jusqu'à un bord délimitant la première ouverture et reliant le deuxième côté latéral et le côté supérieur entre eux, et qu'une distance la plus courte séparant l'axe géométrique de rotation d'une projection de ce bord sur un troisième plan sensiblement perpendiculaire à l'axe géométrique de rotation est inférieure ou égale à 40% du rayon de ventilateur. Ladite paroi présente ainsi une surface particulièrement importante qui vient limiter de manière significative les refoulements vers la cuve des produits déplacés par le ventilateur d'éjection. Il en résulte une augmentation du débit d'éjection des produits à travers la deuxième ouverture ainsi qu'un meilleur vidage de la cuve.

D'autres caractéristiques et avantages de l'invention ressortiront de la description ci-après avec référence aux dessins annexés qui représentent un exemple non limitatif de réalisation d'une machine selon l'invention.

Sur ces dessins :
- la figure 1 représente une vue en perspective d'un exemple de réalisation d'une machine selon l'invention ;
- la figure 2 représente une vue en perspective de l'exemple de réalisation ;
- la figure 3 représente une vue depuis l'intérieur de la cuve de l'exemple de réalisation ;
- la figure 4 représente une autre vue depuis l'intérieur de la cuve de l'exemple de réalisation ;
- la figure 5 représente une vue de côté suivant la coupe V-V de la figure 4.

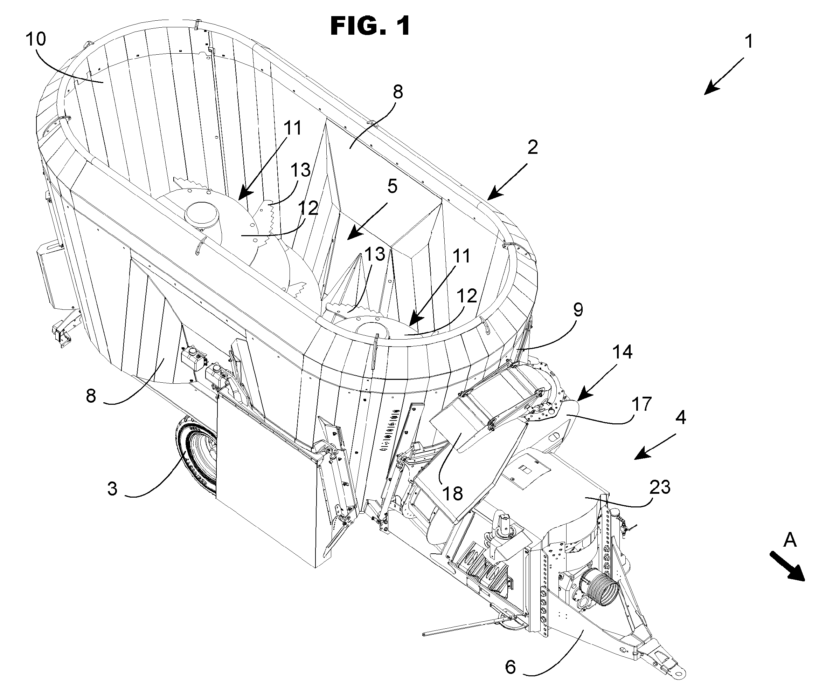

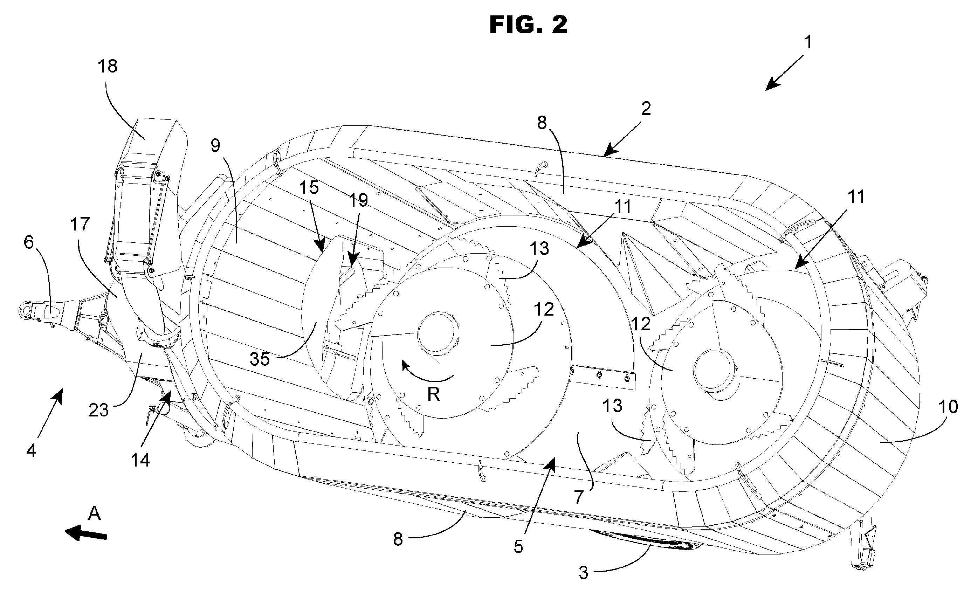

Telle qu'elle est représentée sur les figures 1 et 2, la machine (1) selon l'invention est une machine de distribution de produits pour l'alimentation ou la formation de litière pour les animaux. Cette machine (1) comporte une cuve (2). La cuve (2) repose sur le sol par l'intermédiaire de roues (3) permettant de déplacer la machine (1). La cuve (2) comporte des moyens d'accrochage et d'animation (4) permettant de la relier à un véhicule moteur, non représenté, assurant l'animation des organes de travail (5) de la machine (1) ainsi que le déplacement de cette dernière suivant une direction d'avancement (A). Dans la suite de la description, les notions « avant » et « arrière » sont définies par rapport à cette direction d'avancement (A). Selon l'exemple de réalisation des figures, la cuve (2) est reliée à un timon (6) pour l'accrochage à un tracteur, non représenté, servant à animer les organes de travail (5) de la machine (1) et à la déplacer. La cuve (2) possède un fond (7) et deux parois latérales (8). Ces dernières sont reliées entre elles par une paroi avant (9) et par une paroi arrière (10). La cuve (2) est ouverte sur le dessus de manière à y charger les produits en vue de leur transport et de leur mélange dans la cuve (2).

Les organes de travail (5) de la machine (1) comportent au moins un organe de déchiquetage et de mixage (11) des produits contenus dans la cuve (2). Celui-ci est situé dans la cuve (2). Selon l'exemple de réalisation, l'organe de déchiquetage et de mixage (11) comporte une vis (12) portant plusieurs couteaux (13). Selon l'exemple de réalisation, la vis (12) est montée sur le fond (7) de la cuve (2) par rapport auquel elle peut tourner autour d'un axe sensiblement vertical. Telle que représentée sur les figures, la machine (1) peut comporter plusieurs organes de déchiquetage et de mixage (11) des produits contenus dans la cuve (2), par exemple plusieurs vis (12) pouvant tourner autour d'axes respectifs sensiblement verticaux. Dans l'exemple de réalisation, la machine (1) comporte deux organes de déchiquetage et de mixage (11) qui comportent chacun une vis (12) respective porteuse de couteaux (13). Pendant le travail, ces deux vis (12) peuvent être animées en rotation dans le même sens.

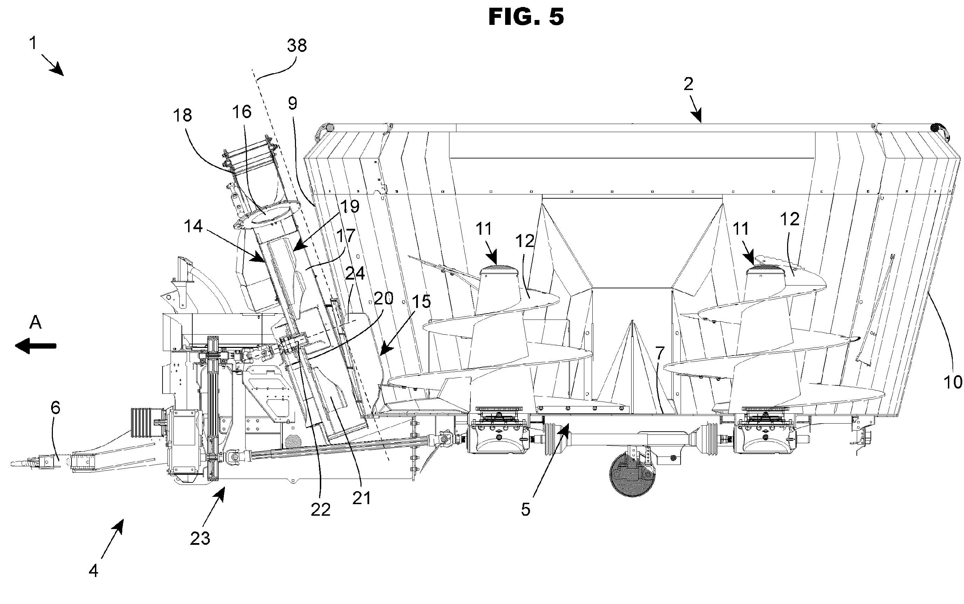

Un carter (14) est situé à une extrémité de la cuve (2). Il est raccordé à une paroi de la cuve (2). Selon l'exemple de réalisation, le carter (14) est raccordé à la paroi avant (9) de la cuve (2). Tel que représenté notamment aux figures 2 et 5, le carter (14) comporte une première ouverture (15). Celle-ci est disposée sur le côté du carter (14) orienté vers la cuve (2). Cette première ouverture (15) est destinée au passage des produits chargés dans la cuve (2) vers l'intérieur du carter (14). Le carter (14) comporte également une deuxième ouverture (16) pour la sortie des produits du carter (14). Cette deuxième ouverture (16) est située dans une partie supérieure (17) du carter (14). Une goulotte d'éjection (18) des produits est raccordée au carter (14) au niveau de la deuxième ouverture (16). Cette goulotte d'éjection (18) permet d'orienter le flux des produits à distribuer, vers le bas et à faible distance de la machine (1) lorsqu'il s'agit de distribuer des rations alimentaires dans des auges, ou davantage vers le haut et à plus grande distance de la machine (1) lorsqu'il s'agit de former une litière pour les animaux.

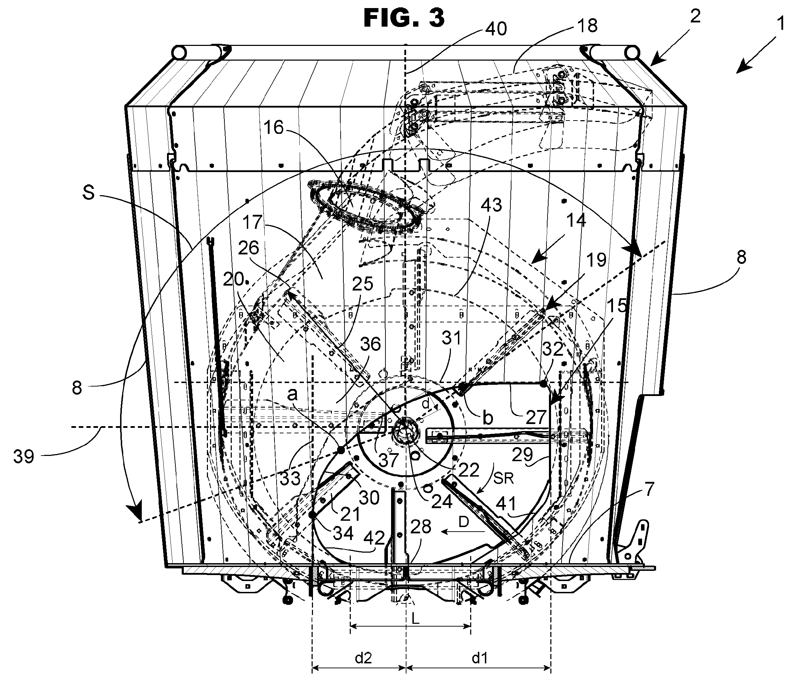

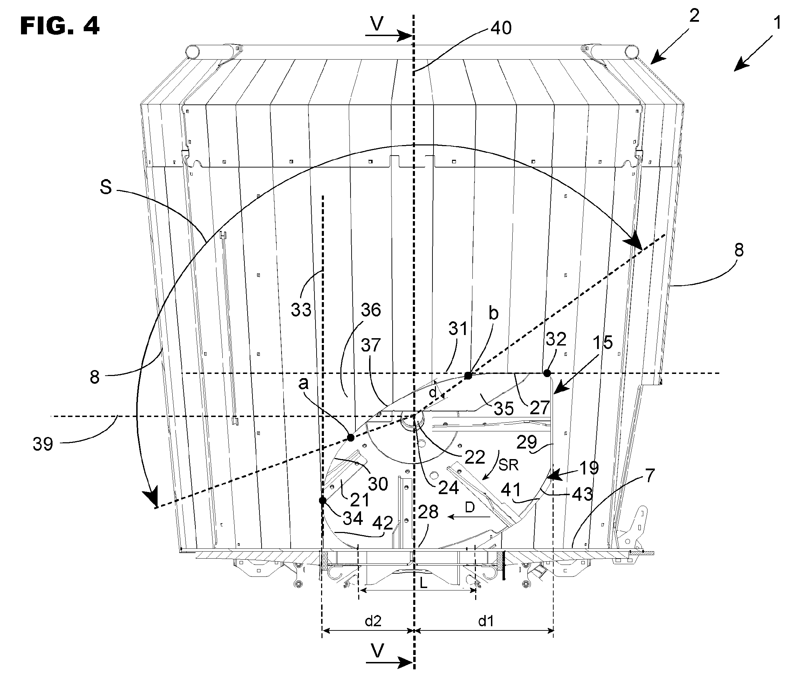

Un ventilateur d'éjection (19) des produits est logé à l'intérieur du carter (14). A la figure 5, le ventilateur d'éjection (19) et l'intérieur du carter (14) sont visibles suivant la coupe V-V de la figure 4. Ils sont également visibles en détail à la figure 3 qui montre la première ouverture (15) en vue depuis l'intérieur de la cuve (2). Sur cette figure 3, la cuve (2) est orientée de sorte que son fond (7) s'étende en réalité perpendiculairement au plan de la figure. Le ventilateur d'éjection (19) comporte un plateau (20) qui porte des pales (21). Ce plateau (20) est porté par un arbre (22) sensiblement horizontal ou légèrement incliné par rapport à l'horizontale. Cet arbre (22) est relié à un boîtier d'entraînement (23), situé à l'avant de la machine (1), permettant d'entraîner le ventilateur d'éjection (19) en rotation durant le travail dans un sens de rotation (SR) autour d'un axe géométrique de rotation (24) sensiblement horizontal ou légèrement incliné par rapport à l'horizontale. La partie supérieure (17) du carter (14), dans laquelle la deuxième ouverture (16) est située, s'étend au-dessus de cet axe géométrique de rotation (24). Le ventilateur d'éjection (19) présente un rayon de ventilateur (25). Tel que visible à la figure 3, celui-ci est défini comme étant le rayon de la trajectoire circulaire, que les extrémités de pales (26) distantes de l'axe géométrique de rotation (24) dessinent, lorsque le ventilateur d'éjection (19) tourne.

Ainsi que représenté aux figures 3 et 4, la première ouverture (15), permettant le passage des produits de la cuve (2) vers le ventilateur d'éjection (19), comporte un côté supérieur (27), un côté inférieur (28), un premier côté latéral (29) et un deuxième côté latéral (30). La première ouverture (15) s'étend verticalement entre le côté supérieur (27) et le côté inférieur (28). Elle s'étend horizontalement entre le premier côté latéral (29) et le deuxième côté latéral (30). Pendant le travail, les produits venant de la cuve (2) et passés à travers la première ouverture (15) sont ensuite repris et déplacés par le ventilateur d'éjection (19) suivant une direction (D) orientée du premier côté latéral (29) vers le deuxième côté latéral (30) compte-tenu du sens de rotation (SR) du ventilateur d'éjection (19). Cette direction (D) est figurée par la flèche correspondante sur les figures 3 et 4. Un premier plan (31) horizontal passe par une extrémité supérieure (32) du côté supérieur (27). Cette extrémité supérieure (32) est identifiée par un point noir sur les figures 3 et 4. Un deuxième plan (33) vertical, sensiblement parallèle à l'axe géométrique de rotation (24), passe par une deuxième extrémité (34) du deuxième côté latéral (30) la plus éloignée horizontalement de l'axe géométrique de rotation (24). Cette deuxième extrémité (34) est identifiée par un point noir sur les figures 3 et 4.

Une porte mobile (35), visible en partie aux figures 2 et 4, est située au niveau de la première ouverture (15). Cette porte mobile (35) est montée sur la paroi de la cuve (2) à laquelle le carter (14) se raccorde. Selon l'exemple de réalisation, la porte mobile (35) est une porte pouvant coulisser verticalement dans des glissières fixées à ladite paroi de la cuve (2), en l'occurrence la paroi avant (9). La porte mobile (35) est déplaçable entre une position fermée et une position d'ouverture maximale. Dans la position fermée, la porte mobile (35) empêche le passage des produits de la cuve (2) vers l'intérieur du carter (14). La porte mobile (35) obture alors complètement la première ouverture (15). Dans la position d'ouverture maximale, la section de passage des produits de la cuve (2) vers l'intérieur du carter (14) correspond sensiblement à la section de passage de la première ouverture (15) elle-même. La porte mobile (35) peut également être partiellement ouverte, à savoir être placée dans une position intermédiaire comprise entre la position fermée et la position d'ouverture maximale, en vue de réguler le flux de produits de la cuve (2) vers le carter (14). A la figure 4, la porte mobile (35) est représentée dans une position où elle est proche de sa position d'ouverture maximale. Pour le travail, la porte mobile (35) est dans un premier temps maintenue dans sa position fermée. Les produits tels que du fourrage ou de la paille en vrac ou sous forme de balles sont chargés dans la cuve (2). Le au moins un organe de déchiquetage et de mixage (11) est ensuite mis en rotation. La vis (12) et les couteaux (13) qu'il comporte viennent alors déchiqueter les produits et les mixer. Lorsque les produits sont suffisamment recoupés et mélangés de manière homogène, le ventilateur d'éjection (19) est mis en rotation. La porte mobile (35) est ensuite ouverte. Les produits contenus dans la cuve (2) sont progressivement poussés vers et à travers la première ouverture (15) par l'organe de déchiquetage et de mixage (11) en rotation, en même temps ces produits sont aspirés par le ventilateur d'éjection (19) car celui-ci tourne à grande vitesse et ses pales (21) créent une dépression au niveau de la première ouverture (15). La rotation des pales (21) autour de l'axe géométrique de rotation (24) provoque le déplacement des produits présents à l'intérieur du carter (14) en direction de la deuxième ouverture (16), d'où ils sont éjectés à travers la goulotte d'éjection (18).

L'invention est notamment caractérisée par le fait qu'une paroi (36) du carter (14) s'étend verticalement depuis le premier plan (31) vers le côté inférieur (28) et horizontalement depuis le deuxième plan (33) vers le premier côté latéral (29), jusqu'à un bord (37) délimitant la première ouverture (15) et reliant le deuxième côté latéral (30) et le côté supérieur (27) entre eux. Le bord (37) s'étend donc notamment au-dessous du premier plan (31). Le bord (37) s'étend également entre le deuxième plan (33) et le premier côté latéral (29). Selon l'exemple de réalisation des figures, le bord (37) s'étend de manière oblique entre le deuxième côté latéral (30) et le côté supérieur (27). Dans la partie intérieure du carter (14) s'étendant, suivant le sens de rotation (SR), du bord (37) jusqu'à la deuxième ouverture (16), l'air est comprimé en raison de la grande vitesse de rotation du ventilateur d'éjection (19) et de la section de la deuxième ouverture (16) sensiblement plus petite que la section de la première ouverture (15). L'invention prévoit qu'une distance (d) la plus courte, séparant l'axe géométrique de rotation (24) d'une projection de ce bord (37) sur un troisième plan (38) sensiblement perpendiculaire à l'axe géométrique de rotation (24), soit inférieure ou égale à 40% du rayon de ventilateur (25). Ce troisième plan (38) est visible à la figure 5. Grâce à cette caractéristique, le bord (37) passe à une distance relativement réduite de l'axe géométrique de rotation (24). Dans le carter (14), ladite partie intérieure, où l'air est comprimé, présente un volume important, ce qui réduit considérablement le risque que les produits déplacés par le ventilateur d'éjection (19) ne soient refoulés en direction de la cuve (2). Ils sont au contraire efficacement dirigés vers la deuxième ouverture (16).

Selon une caractéristique de l'invention, une première courbe de points constitue une partie au moins du bord (37), une projection de chaque point de cette première courbe sur le troisième plan (38) est située à une distance de l'axe géométrique de rotation (24) inférieure ou égale à 40% du rayon de ventilateur (25). Autrement dit, une partie au moins du bord (37), non réduite à un point, est localisée à l'intérieur d'un cylindre dont l'axe coïncide avec l'axe géométrique de rotation (24) et présentant un rayon égal à 40% du rayon de ventilateur (25). Ce cylindre intersecte le bord (37) en deux points (a) et (b) représentés aux figures 3 et 4. La première courbe est comprise entre ces deux points (a) et (b).

Selon une autre caractéristique de l'invention, le bord (37) est constitué d'une deuxième courbe de points qui relie le deuxième côté latéral (30) et le côté supérieur (27) entre eux, une projection de chaque point de cette deuxième courbe sur le troisième plan (38) est située à une distance de l'axe géométrique de rotation (24) inférieure ou égale à 40% du rayon de ventilateur (25). Autrement dit, l'invention prévoit avantageusement que le bord (37) soit constitué par l'ensemble des points qui relie le deuxième côté latéral (30) et le côté supérieur (27) entre eux, et que cet ensemble est en intégralité localisé à l'intérieur d'un cylindre dont l'axe coïncide avec l'axe géométrique de rotation (24) et présentant un rayon égal à 40% du rayon de ventilateur (25). Le bord est délimité par les points (a) et (b).

Selon une caractéristique avantageuse de l'invention, une troisième courbe de points constitue une partie au moins du bord (37), une projection de chaque point de cette troisième courbe sur le troisième plan (38) est située à une distance de l'axe géométrique de rotation (24) inférieure ou égale à 40% du rayon de ventilateur (25), cette troisième courbe de points s'étend sur un secteur angulaire (S) d'au moins 60° autour de l'axe géométrique de rotation (24). Autrement dit, l'invention prévoit avantageusement qu'une partie au moins du bord (37) soit constituée par un ensemble de points localisé en intégralité à l'intérieur d'un cylindre centré sur l'axe géométrique de rotation (24) et présentant un rayon égal à 40% du rayon de ventilateur (25), et que cet ensemble de points s'étende sur un secteur angulaire (S) d'au moins 60° autour de l'axe géométrique de rotation (24). Cette géométrie particulière du bord (37) est ainsi caractérisée par une longueur importante du bord (37) et par le fait qu'il est situé à une distance relativement réduite de l'axe géométrique de rotation (24). De plus, la paroi (36), que ce bord (37) délimite, réduit significativement la section de la première ouverture (15) dans sa partie comprise entre le deuxième côté latéral (30) et le côté supérieur (27). En même temps, la première ouverture (15) conserve une section relativement importante dans sa partie comprise entre le premier côté latéral (29) et le côté supérieur (27). De la sorte, la première ouverture (15) présente une section totale de passage des produits de la cuve (2) vers l'intérieur du carter (14) suffisamment importante pour assurer un bon débit d'éjection des produits, tout en garantissant que ces produits ne sont pas refoulés vers la cuve (2). Par ailleurs, lorsque la porte mobile (35) est déplacée d'une position d'ouverture partielle, notamment demi-ouverte, vers sa position d'ouverture maximale en vue d'augmenter le débit d'éjection des produits de la machine (1), l'agencement de la troisième courbe de points garantit que la section de passage des produits sous la porte mobile (35) augmente de manière à satisfaire l'augmentation recherchée du débit d'éjection des produits et que ces produits sont bien aspirés par le ventilateur d'éjection (19) sans être refoulés vers la cuve (2).

Selon une caractéristique de l'invention, le secteur angulaire (S) sur lequel la troisième courbe de points s'étend est de 135° ± 45° autour de l'axe géométrique de rotation (24) et est compris au moins entre un plan horizontal (39) et un plan vertical (40) qui passent sensiblement par l'axe géométrique de rotation (24). Ainsi, les points du bord (37), situés à une distance de l'axe géométrique de rotation (24) inférieure ou égale à 40% du rayon de ventilateur (25), se répartissent sur un secteur angulaire (S) compris entre 90° et 180° autour de l'axe géométrique de rotation (24) et s'étendant au moins entre lesdits plans horizontal et vertical (39 et 40). Selon l'exemple de réalisation visible aux figures 3 et 4, le secteur angulaire (S) est voisin de 180°.

Selon une caractéristique avantageuse de l'invention, visible aux figures 3 et 4, le deuxième plan (33) est situé à une deuxième distance (d2) de l'axe géométrique de rotation (24) qui est 10% à 50% plus faible qu'une première distance (d1) séparant le premier côté latéral (29) de l'axe géométrique de rotation (24). Cette caractéristique réduit le risque que des produits déplacés par le ventilateur d'éjection (19) ne soient refoulés vers la cuve (2) au niveau du deuxième côté latéral (30). Cette caractéristique permet aussi de réduire la section totale de la première ouverture (15), ce qui augmente la dépression créée au niveau de la première ouverture (15) par le ventilateur d'éjection (19) en rotation et donc améliore le remplissage du carter (14) en produits venant de la cuve (2).

Selon une caractéristique avantageuse de l'invention, le côté inférieur (28) se raccorde au premier côté latéral (29) au moyen d'un premier biais (41). Selon l'exemple de réalisation des figures, ce premier biais (41) est situé, par rapport à l'axe géométrique de rotation (24), à l'opposé du bord (37) reliant le deuxième côté latéral (30) et le côté supérieur (27) entre eux. Compte-tenu du fait que la rotation (R) de l'organe de déchiquetage et de mixage (11) le plus proche de la première ouverture, matérialisée à la figure 2 par la flèche correspondante, déplace les produits en direction du premier côté latéral (29), le premier biais (41) évite une accumulation néfaste de produits à l'endroit où ce premier côté latéral (29) se raccorde au côté inférieur (28). Le risque d'une telle accumulation existerait notamment dans le cas d'un raccord à angle droit entre ces deux côtés (28 et 29). Le premier biais (41) permet également à la première ouverture (15) de présenter une section de passage qui croît progressivement à mesure que la porte mobile (35) est déplacée de sa position fermée vers une position partiellement ouverte. Cet accroissement progressif permet à la porte mobile (35) de réguler précisément le flux des produits en direction du ventilateur d'éjection (19). Enfin, lorsque la porte mobile (35) vient à être refermée, elle racle et sectionne les produits localisés au niveau du premier biais (41), ceci se faisant de manière progressive du fait de l'orientation oblique de ce premier biais (41). On évite ainsi qu'un paquet de produits ne s'accumule sous la porte mobile (35) et n'en empêche la fermeture complète.

Selon une autre caractéristique avantageuse de l'invention, le côté inférieur (28) se raccorde au deuxième côté latéral (30) au moyen d'un deuxième biais (42). Ce deuxième biais (42) permet à la première ouverture (15) de présenter une section de passage qui croît progressivement à mesure que la porte mobile (35) est déplacée de sa position fermée vers une position partiellement ouverte. Cet accroissement progressif permet à la porte mobile (35) de réguler précisément le flux des produits en direction du ventilateur d'éjection (19). L'exemple de réalisation des figures comporte un tel deuxième biais (42) en plus du premier biais (41) cité précédemment, la combinaison de ces deux biais (41 et 42) donne une section de passage des produits qui augmente très progressivement à mesure que la porte mobile (35) quitte sa position fermée en direction d'une position partiellement ouverte. Enfin, lorsque la porte mobile (35) vient à être refermée, elle racle et sectionne les produits localisés au niveau du deuxième biais (42), ceci se faisant de manière progressive du fait de l'orientation oblique de ce deuxième biais (42). On évite ainsi qu'un paquet de produits ne s'accumule sous la porte mobile (35) et n'en empêche la fermeture complète.

Tel que visible aux figures 3 et 4, le plateau (20) présente une périphérie (43) qui dessine une trajectoire circulaire autour de l'axe géométrique de rotation (24) lorsque le ventilateur d'éjection (19) tourne. Le premier biais (41) ou le deuxième biais (42) présente une courbure qui suit sensiblement cette trajectoire circulaire. Ainsi, en vue depuis l'intérieur de la cuve (2), les produits franchissant la première ouverture (15) au niveau dudit premier ou deuxième biais (41, 42) parviennent en grande majorité directement sur le plateau (20) et les pales (21) qu'il porte. Ces produits ne risquent pas de passer autour du plateau (20) et de venir se loger entre l'intérieur du carter (14) et le plateau (20) ou les pales (21). Selon l'exemple de réalisation, le premier biais (41) et le deuxième biais (42) présentent chacun une courbure respective qui suit sensiblement la trajectoire circulaire du plateau (20).

Selon une caractéristique particulièrement avantageuse de l'invention, une largeur minimale (L) de passage des produits entre le premier biais (41) et le deuxième biais (42) est égale à 60 ± 30 % du rayon de ventilateur (25). C'est-à-dire, cette largeur minimale (L) est comprise entre 30% et 90% du rayon de ventilateur (25). Lorsque la cuve (2) vient à être quasiment vidée après que les produits ont été distribués, la porte mobile (35) est placée dans une position où elle est pratiquement refermée. Ladite largeur minimale (L) donne alors une section de passage des produits particulièrement réduite. Le ventilateur d'éjection (19) tournant à grande vitesse génère alors une dépression importante au-dessous de la porte mobile (35) qui permet d'aspirer efficacement les derniers brins de fourrage ou de paille présents sur le fond (7) de la cuve (2).

Bien entendu, l'invention n'est pas limitée à l'exemple de réalisation décrit et représenté sur les figures annexées. Des modifications restent possibles, notamment du point de vue de la constitution, de la disposition ou du nombre des divers éléments, par combinaison différente des caractéristiques susvisées, ou par substitution d'équivalents techniques, sans sortir pour autant du domaine de protection de l'invention comme défini par les revendications annexes.

## Revendications

1. Machine (1) de distribution de produits pour l'alimentation ou la formation de litière pour les animaux, comportant :
- une cuve (2) pour transporter les produits,
- un ventilateur d'éjection (19) présentant un rayon de ventilateur (25) et pouvant être entraîné en rotation durant le travail dans un sens de rotation (SR) autour d'un axe géométrique de rotation (24) sensiblement horizontal ou légèrement incliné par rapport à l'horizontale,
- un carter (14) situé à une extrémité de la cuve (2) et dans lequel le ventilateur d'éjection (19) est logé, ce carter (14) comportant une première ouverture (15) pour le passage des produits de la cuve (2) vers le ventilateur d'éjection (19) et une deuxième ouverture (16) pour la sortie des produits du carter (14), la première ouverture (15) comportant un côté supérieur (27), un côté inférieur (28), un premier côté latéral (29) et un deuxième côté latéral (30), les produits venant de la cuve (2) et passés à travers la première ouverture (15) étant ensuite repris et déplacés par le ventilateur d'éjection (19) suivant une direction (D) orientée du premier côté latéral (29) vers le deuxième côté latéral (30) compte-tenu du sens de rotation (SR) du ventilateur d'éjection (19), un premier plan (31) étant horizontal et passant par une extrémité supérieure (32) du côté supérieur (27), un deuxième plan (33) étant vertical, sensiblement parallèle à l'axe géométrique de rotation (24) et passant par une deuxième extrémité (34) du deuxième côté latéral (30) la plus éloignée horizontalement de l'axe géométrique de rotation (24),
- au moins un organe de déchiquetage et de mixage (11) des produits contenus dans la cuve (2) pouvant être animé durant le travail et déplaçant les produits contenus dans la cuve (2) vers la première ouverture (15), une paroi (36) du carter (14) s'étendant verticalement depuis le premier plan (31) vers le côté inférieur (28) et horizontalement depuis le deuxième plan (33) vers le premier côté latéral (29), jusqu'à un bord (37) délimitant la première ouverture (15) et reliant le deuxième côté latéral (30) et le côté supérieur (27) entre eux, **caractérisée en ce qu'**une distance (d) la plus courte séparant l'axe géométrique de rotation (24) d'une projection de ce bord (37) sur un troisième plan (38) sensiblement perpendiculaire à l'axe géométrique de rotation (24) est inférieure ou égale à 40% du rayon de ventilateur (25).

2. Machine selon la revendication 1, ***caractérisée par le fait qu***'une première courbe de points constitue une partie au moins du bord (37) et qu'une projection de chaque point de cette première courbe sur le troisième plan (38) est située à une distance de l'axe géométrique de rotation (24) inférieure ou égale à 40% du rayon de ventilateur (25).

3. Machine selon la revendication 1, ***caractérisée par le fait que*** le bord (37) est constitué d'une deuxième courbe de points qui relie le deuxième côté latéral (30) et le côté supérieur (27) entre eux, et qu'une projection de chaque point de cette deuxième courbe sur le troisième plan (38) est située à une distance de l'axe géométrique de rotation (24) inférieure ou égale à 40% du rayon de ventilateur (25).

4. Machine selon la revendication 1, ***caractérisée par le fait qu***'une troisième courbe de points constitue une partie au moins du bord (37), qu'une projection de chaque point de cette troisième courbe sur le troisième plan (38) est située à une distance de l'axe géométrique de rotation (24) inférieure ou égale à 40% du rayon de ventilateur (25), et que cette troisième courbe de points s'étend sur un secteur angulaire (S) d'au moins 60° autour de l'axe géométrique de rotation (24).

5. Machine selon la revendication 4, ***caractérisée par le fait que*** le secteur angulaire (S) est de 135° ± 45° autour de l'axe géométrique de rotation (24) et est compris au moins entre un plan horizontal (39) et un plan vertical (40) qui passent sensiblement par l'axe géométrique de rotation (24).

6. Machine selon la revendication 1, ***caractérisée par le fait que*** le deuxième plan (33) est situé à une deuxième distance (d2) de l'axe géométrique de rotation (24) qui est 10% à 50% plus faible qu'une première distance (d1) séparant le premier côté latéral (29) de l'axe géométrique de rotation (24).

7. Machine selon la revendication 1, ***caractérisée par le fait que*** le côté inférieur (28) se raccorde au premier côté latéral (29) au moyen d'un premier biais (41).

8. Machine selon la revendication 1, ***caractérisée par le fait que*** le côté inférieur (28) se raccorde au deuxième côté latéral (30) au moyen d'un deuxième biais (42).

9. Machine selon la revendication 7 ou 8, ***caractérisée par le fait que*** le ventilateur d'éjection (19) comporte des pales (21) portées par un plateau (20) dont une périphérie (43) dessine une trajectoire circulaire autour de l'axe géométrique de rotation (24) lorsque le ventilateur d'éjection (19) tourne et que le premier biais (41) et/ou le deuxième biais (42) présente(nt) une courbure qui suit sensiblement cette trajectoire circulaire.

10. Machine selon les revendications 7 et 8, ***caractérisée par le fait qu**'*une largeur minimale (L) de passage des produits entre le premier biais (41) et le deuxième biais (42) est égale à 60 ± 30 % du rayon de ventilateur (25).

## Patentansprüche

1. Maschine (1) für die Verteilung von Produkten zur Fütterung oder zur Bildung von Einstreu für Tiere mit:
- einem Behälter (2) für den Transport der Produkte,
- einem Auswurfgebläse (19), das ein Gebläseradius (25) aufweist und bei der Arbeit um eine im Wesentlichen horizontale oder zur Horizontale leicht geneigte geometrische Drehachse (24) in eine Drehrichtung (SR) drehangetrieben werden kann,
- einem Gehäuse (14), das sich an einem Ende des Behälters (2) erstreckt und in welchem das Auswurfgebläse (19) untergebracht ist, wobei dieses Gehäuse (14) eine erste Öffnung (15) zum Durchfluss der Produkte vom Behälter (2) zum Auswurfgebläse (19) und eine zweite Öffnung (16) zum Auslass der Produkten aus dem Gehäuse (14) aufweist, wobei die erste Öffnung (15) eine obere Seite (27), eine untere Seite (28), eine erste laterale Seite (29) und eine zweite laterale Seite (30) aufweist, wobei die Produkte, die von dem Behälter (2) kommen und durch die erste Öffnung (15) geflossen sind dann durch das Auswurfgebläse (19) wiederaufgenommen und in eine Richtung (D) verschoben werden, die von der ersten lateralen Seite (29) zu der zweiten lateralen Seite (30) ausgerichtet ist mit Bezug auf die Drehrichtung (SR) des Auswurfgebläses (19), wobei eine erste Ebene (31) horizontal ist und durch ein oberes Ende (32) der oberen Seite (27) verläuft, wobei eine zweite Ebene (33) senkrecht, im Wesentlichen parallel zur geometrischen Drehachse (24) ist und durch ein zweites Ende (34) der zweiten lateralen Seite (30) verläuft, das horizontal am weitesten von der geometrischen Drehachse (24) entfernt ist,
- mindestens einem Shredder- und Mischelement (11) für die in dem Behälter (2) enthaltenen Produkte, das bei der Arbeit angetrieben werden kann und die in dem Behälter (2) enthaltenen Produkte zu der ersten Öffnung (15) befördert, wobei eine Wand (36) des Gehäuses (14) sich senkrecht von der ersten Ebene (31) zu der unteren Seite (28) und horizontal von der zweiten Ebene (33) zu der ersten lateralen Seite (29) erstreckt, bis zu einem Rand (37), der die erste Öffnung (15) begrenzt und die zweite laterale Seite (30) und die obere Seite (27) miteinander verbindet,
***dadurch gekennzeichnet,* dass** ein kürzester Abstand (d), der die geometrische Drehachse (24) von einer Projektion dieses Randes (37) auf eine zur geometrischen Drehachse (24) im Wesentlichen senkrechten dritten Ebene (38) trennt, geringer als oder gleich zu 40% des Gebläseradius (25) ist.

2. Maschine nach Anspruch 1, ***dadurch gekennzeichnet,* dass** eine erste Punktlinie mindestens einen Teil des Randes (37) bildet und, dass eine Projektion von jedem Punkt dieser ersten Linie auf die dritte Ebene (38) in einem Abstand von der geometrischen Drehachse (24) liegt, der geringer als or gleich zu 40% des Gebläseradius (25) ist.

3. Maschine nach Anspruch 1, ***dadurch gekennzeichnet,* dass** der Rand (37) aus einer zweiten Punktlinie gebildet ist, die die zweite laterale Seite (30) und die obere Seite (27) miteinander verbindet und, dass eine Projektion von jedem Punkt dieser zweiten Linie auf die dritte Ebene (38) in einem Abstand von der geometrischen Drehachse (24) liegt, der geringer als oder gleich zu 40% des Gebläseradius (25) ist.

4. Maschine nach Anspruch 1, ***dadurch gekennzeichnet,* dass** eine dritte Punktlinie mindestens einen Teil des Randes (37) bildet, dass eine Projektion von jedem Punkt dieser dritten Linie auf eine dritte Ebene (38) in einem Abstand von der geometrischen Achse (24) liegt, der geringer als oder gleich zu 40% des Gebläseradius (25) liegt und, dass diese dritte Punktlinie sich auf einem Winkelsegment (S) von mindestens 60° rund um die geometrische Drehachse (24) erstreckt.

5. Maschine nach Anpruch 4, ***dadurch gekennzeichnet,* dass** der Winkelsegment (S) 135° ± 45° rund um die geometrische Drehachse (24) beträgt und mindestens zwischen einer horizontalen Ebene (39) und einer senkrechten Ebene (40), die im Wesentlichen durch die geometrische Drehachse (24) verlaufen, liegt.

6. Maschine nach Anspruch 1, ***dadurch gekennzeichnet,* dass** die zweite Ebene (33) in einem zweiten Abstand (d2) von der geometrischen Drehachse (24) liegt, der 10% bis 50% geringer ist als ein erster Abstand (d1), der die erste laterale Seite (29) von der geometrischen Drehachse (24) trennt.

7. Maschine nach Anspruch 1, ***dadurch gekennzeichnet,* dass** sich die untere Seite (28) mittels einer ersten Schräge (41) an die erste laterale Seite (29) schliesst.

8. Maschine nach Anspruch 1, ***dadurch gekennzeichnet,* dass** sich die untere Seite (28) mittels einer zweiten Schräge (42) an die zweite laterale Seite (30) schliesst.

9. Maschine nach Anspruch 7 oder 8, ***dadurch gekennzeichnet,* dass** das Auswurfgebläse (19) Blätter (21) aufweist, die von einer Platte (20) getragen werden, von welcher ein Umfang (43) eine runde Bahn rund um die geometrische Drehachse (24) beschreibt, wenn das Auswurfgebläse (19) sich dreht und die erste Schräge (41) und/oder die zweite Schräge (42) eine Krümmung aufweist (aufweisen), die dieser runden Bahm im Wesentlichen folgt.

10. Maschine nach Ansprüchen 7 und 8, ***dadurch gekennzeichnet,* dass** eine Minimalbreite (L) für den Durchfluss der Produkten zwischen der ersten Schräge (41) und der zweiten Schräge (42) gleich zu 60 ± 30 % des Gebläseradius (25) ist.

## Claims

1. Machine (1) for distributing products for feeding or forming animal bedding, comprising:
- a tank (2) for conveying the products,
- a throw-out-blower (19) having a blower radius (25) and which may be driven in rotation during work in a direction of rotation (SR) around a geometric rotation axis (24) substantially horizontal or slightly tilted relatively to the horizontal,
- a casing (14) located at one end of the tank (2) and wherein the throw-out-blower (19) is housed, this casing (14) comprising a first opening (15) for the passage of the products of the tank (2) towards the throw-out-blower (19) and a second opening (16) for the outflow of the products of the casing (14), the first opening (15) comprising an upper side (27), a lower side (28), a first lateral side (29) and a second lateral side (30), the products coming from the tank (2) and having passed through the first opening (15) then being taken again and moved by the throw-out-blower (19) along a direction (D) oriented from the first lateral side (29) towards the second lateral side (30) taking into account the direction of rotation (SR) of the throw-out-blower (19), a first plane (31) being horizontal and passing through an upper end (32) of the upper side (27), a second plane (33) being vertical, substantially parallel to the geometric rotation axis (24) and passing through a second end (34) of the second lateral side (30) the furthest away horizontally from the geometric rotation axis (24),
- at least one element (11) for shredding and mixing the products contained in the tank (2) which may be driven during work and moving the products contained in the tank (2) towards the first opening (15), a wall (36) of the casing (14) extending vertically from the first plane (31) towards the lower side (28) and horizontally from the second plane (33) towards the first lateral side (29), as far as an edge (37) delimiting the first opening (15) and connecting the second lateral side (30) and the upper side (27) together,
***characterized in* that** a shortest distance (d) separating the geometric rotation axis (24) from a projection of this edge (37) on a third plane (38) substantially perpendicular to the geometric rotation axis (24) is less than or equal to 40% of the blower radius (25).

2. Machine according to claim 1, ***characterized in* that** a first curve of points forms at least one portion of the edge (37) and that a projection of each point of this first curve onto the third plane (38) is located at a distance from the geometric rotation axis (24) of less than or equal to 40% of the blower radius (25).

3. Machine according to claim 1, ***characterized in* that** the edge (37) consists of a second curve of points which connects the second lateral side (30) and the upper side (27) together, and that a projection of each point of this second curve on the third plane (38) is located at a distance from the geometric rotation axis (24) of less than or equal to 40% of the blower radius (25).

4. Machine according to claim 1, ***characterized in* that** a third curve of points forms at least one portion of the edge (37), that a projection of each point of this third curve onto the third plane (38) is located at a distance from the geometric rotation axis (24) of less than or equal to 40% of the blower radius (25), and that this third curve of points extends over an angular sector (S) of at least 60° around the geometric rotation axis (24).

5. Machine according to claim 4, ***characterized in* that** the angular sector (S) is 135° ± 45° around the geometric rotation axis (24) and is at least comprised between a horizontal plane (39) and a vertical plane (40) which substantially pass through the geometric rotation axis (24).

6. Machine according to claim 1, ***characterized in* that** the second plane (33) is located at a second distance (d2) from the geometric rotation axis (24) which is 10% to 50% smaller than a first distance (d1) separating the first lateral side (29) from the geometric rotation axis (24).

7. Machine according to claim 1, ***characterized in* that** the lower side (28) is connected to the first lateral side (29) by means of a first obliquity (41).

8. Machine according to claim 1, ***characterized in* that** the lower side (28) is connected to the second lateral side (30) by means of a second obliquity (42).

9. Machine according to claim 7 or 8, ***characterized in* that** the throw-out-blower (19) includes blades (21) carried by a table (20), a periphery (43) of which describes a circular trajectory around the geometric rotation axis (24) when the throw-out-blower (19) rotates and that the first obliquity (41) and/or the second obliquity (42) have a curvature which substantially follows this circular trajectory.

10. Machine according to claims 7 and 8, ***characterized in* that** a minimum passage width (L) for the products between the first obliquity (41) and the second obliquity (42) is equal to 60 ± 30 % of the blower radius (25).
